# FASCICULE DE BREVET EUROPEEN

(11) **EP 1 372 810 B1**
(45) Date de publication et mention de la délivrance du brevet: **07.06.2006**
(21) Numéro de dépôt: 02718266.6
(22) Date de dépôt: 15.03.2002
(51) Int. Cl.: B01D 29/15, B01D 29/92, B01D 35/153, B01D 35/16, B01D 36/00

(54) **CARTOUCHE DE FILTRATION A VENT INT GR DANS LE FLASQUE SUP RIEUR ET ENSEMBLE DE FILTRAGE CORRESPONDANT**
FILTERPATRONE MIT INTEGRIERTER LÜFTUNG IN DER OBERPLATTE UND ENTSPRECHENDE FILTRIERANORDNUNG
FILTERING CARTRIDGE WITH INTEGRATED VENT IN THE UPPER PLATE AND CORRESPONDING FILTERING ASSEMBLY

(30) Priorité: 23.03.2001 FR 0103993
(43) Date de publication de la demande: 02.01.2004
(73) Titulaire: FLEETGUARD, 29556 Quimper Cédex 9 (FR)
(72) Inventeur: MALGORN, Gérard, F-29000 Quimper (FR); LE ROUX, Benoît, F-29170 Fouesnant (FR); GUICHAOUA, Jean-Luc, F-29120 Combrit (FR)
(74) Mandataire: Vidon, Patrice
(86) Numéro de dépôt international: PCT/FR2002/000941
(87) Numéro de publication internationale: WO 2002/076568

(56) Documents cités:
- DE-A- 4 344 588
- DE-A- 19 519 352
- DE-A- 19 716 085
- DE-A- 19 934 378
- FR-A- 1 445 709
- US-A- 4 435 287

## Description

L'invention concerne le domaine de la conception et de la réalisation des ensembles de filtrage utilisés pour filtrer les liquides circulant dans les moteurs ou les équipements hydrauliques.

De tels ensembles de filtrage sont constitués par un corps de filtre à l'intérieur duquel est disposée une cartouche de filtrage, qui présente généralement une forme cylindrique et qui inclut un medium de filtration, pouvant par exemple être en papier, en carton ou encore en feutre. Ce médium de filtration est classiquement délimité par deux flasques d'extrémité.

De telles cartouches de filtration coopèrent généralement avec un tube central, solidaire ou non des flasques, dont le diamètre extérieur avoisine le diamètre intérieur du médium de filtration de façon à limiter les déformations du médium sous l'effet de la pression s'exerçant à l'intérieur de l'ensemble de filtrage.

Les flasques inférieurs peuvent se prolonger pour présenter des moyens de mise en place et de maintien de la cartouche dans l'ensemble de filtrage.

Alternativement, on connaît des ensembles de filtrage mettant en oeuvre un tube support sur lequel est rapportée la cartouche de filtration, le tube étant monté à demeure dans l'ensemble de filtrage.

Dans ce deuxième cas de figure, on connaît notamment des ensembles de filtrage tels que décrit dans le document DE-A-19 519 352 mettant en oeuvre un tube support incluant un évent destiné à assurer le dégazage de l'ensemble de filtrage, en particulier au moment de son remplissage en liquide.

De tels tubes support étant montés à demeure dans l'ensemble de filtrage, on constate à terme soit une érosion, soit un encrassement de l'évent, ce qui, dans les deux cas, diminue peu à peu les performances de l'ensemble de filtrage.

En effet, lorsque l'évent est érodé, la fuite permanente de liquide non filtré qui retourne au réservoir de liquide augmente, entraînant par conséquent une diminution de la quantité de liquide disponible à filtrer et un gaspillage d'énergie.

Dans le cas d'un encrassement de l'évent, le dégazage de l'ensemble de filtrage est de moins en moins bien assuré, ce qui engendre une baisse du niveau de liquide, voire une augmentation de la pression à l'intérieur de l'ensemble de filtrage, au détriment de la longévité de la cartouche de filtration, voire, à terme, de la qualité de la filtration.

En cas de défaillance constatée (pouvant avoir entraîné des conséquences plus ou moins fâcheuses sur le moteur ou l'équipement hydraulique), le remplacement du tube pourrait certes être envisagé. Cette opération n'est généralement pas prévue, et si tel était le cas, elle impliquerait une maintenance spécifique, entraînerait un surcoût et serait de nature à produire de nouveaux déchets à éliminer.

L'invention a notamment pour objectif de pallier les inconvénients de l'art antérieur.

Plus précisément, l'invention a pour objectif de fournir un ensemble de filtrage intégrant des moyens de dégazage qui n'engendrent pas, ou pour le moins limitent, les phénomènes d'érosion ou d'encrassement intervenant classiquement dans de tels ensembles.

Un autre objectif de l'invention est de proposer un tel ensemble de filtrage qui ne nécessite pas un surcroît de maintenance par rapport aux solutions de l'art antérieur.

Encore un autre objectif de l'invention est de proposer un tel ensemble de filtrage dont les moyens de dégazage limitent la fuite de liquide non filtré.

Encore un autre objectif de l'invention est de proposer un tel ensemble de filtrage pour lequel le remplacement de la cartouche de filtration limite la quantité de pièces et/ou de matière à éliminer.

L'invention a également pour objectif de proposer un tel ensemble de filtrage pour lequel les moyens de dégazage peuvent être fabriqués aisément en grandes séries.

L'inventton a aussi pour objectif de proposer un tel ensemble de filtrage qui favorise le retour du liquide, lors du changement de la cartouche de filtration, vers le réservoir de liquide.

Ces différents objectifs, ainsi que d'autres qui apparaîtront par la suite, sont atteints à l'aide d'un ensemble de filtrage pour liquide circulant dans un moteur ou un équipement hydraulique, du type comprenant :
- une cuve ;
- un couvercle ;
- un élément tubulaire présentant une lumière centrale et destiné à supporter la surface intérieure d'une cartouche de filtration ;
- une cartouche de filtration séparable dudit élément tubulaire
caractérisé en ce que ladite cartouche de filtration comprend un médium de filtration présentant une lumière tubulaire sans tube central intérieur, ledit medium de filtration étant délimité par un flasque supérieur et un flasque inférieur, ledit flasque supérieur présentant un évent communiquant avec ladite lumière tubulaire dudit medium de filtration et en ce que la lumière centrale dudit élément tubulaire communique de façon étanche avec ledit évent de ladite cartouche lorsque celle-ci est en position de filtrage dans l'ensemble de filtrage.

L'évent permettant le dégazage est ainsi intégré à la cartouche de filtration. Contrairement à l'art antérieur, l'évent ne fait pas partie intégrante d'un organe restant à demeure dans l'ensemble de filtrage ou nécessitant une maintenance spécifique. A l'inverse, à chaque remplacement de la cartouche de filtration (opération généralement planifiée en fonction du nombre d'heures d'utilisation ou de kilomètres parcourus s'agissant d'un véhicule), on rapporte un nouvel évent, assurant un fonctionnement des moyens de dégazage optimal. Les effets de l'érosion et/ou de l'encrassement sont ainsi éliminés ou à tout le moins limités, au niveau de l'évent.

Selon un premier mode de réalisation, ledit flasque supérieur est plat.

Selon un deuxième mode de réalisation, ledit flasque supérieur présente une cheminée.

On augmente ainsi, à l'aide de la cheminée, le niveau de dégazage une fois la cartouche placée à l'intérieur de l'ensemble de filtration.

Selon une solution préférée, ledit évent présente une portion sensiblement cylindrique et au moins une extrémité évasée.

De cette façon, le flasque supérieur de la cartouche incluant l'évent peut être aisément fabriqué par moulage et avec précision. D'autres techniques de fabrication peuvent toutefois être adaptées.

Avantageusement, la portion cylindrique dudit évent présente un diamètre compris entre 0,2 et 1 mm.

Le dégazage est ainsi assuré de manière efficace tout en limitant la fuite permanente de liquide non filtré qui retourne au réservoir.

La cartouche, de structure relativement simple, est facilement intégrée et séparée de l'ensemble de filtrage. Ainsi, la maintenance de l'évent du dispositif de dégazage coïncide avec le remplacement de la cartouche et ne produit pas davantage de déchets à éliminer que la cartouche elle-même.

Selon une solution avantageuse, ledit évent est susceptible de communiquer, par l'intermédiaire de ladite lumière centrale dudit élément tubulaire, avec un conduit de retour dudit liquide, ainsi qu'éventuellement du gaz, au réservoir dudit moteur ou dudit équipement hydraulique.

On obtient ainsi une configuration de l'ensemble de filtrage simple et efficace.

Préférentiellement, l'ensemble de filtrage comprend un joint emmanché sur ledit élément tubulaire et venant en appui sous ledit flasque supérieur. Préférentiellement, ledit joint est un joint à lèvre.

On contribue ainsi à limiter la quantité de liquide non filtré susceptible de retourner au réservoir de liquide par l'intermédiaire de la lumière centrale de l'élément tubulaire.

Selon une autre caractéristique de l'invention, ledit élément tubulaire comprend au moins un orifice d'évacuation susceptible de communiquer avec un conduit de sortie dudit fluide filtré ménagé dans ladite cuve.

Selon une solution préférée, ledit élément tubulaire comprend au moins un orifice de drainage susceptible de communiquer avec ledit conduit ménagé dans ladite cuve pour le retour dudit liquide, ainsi qu'éventuellement du gaz, au réservoir dudit moteur ou dudit équipement hydraulique.

Cette disposition s'avère particulièrement efficace pour vidanger l'ensemble de filtrage au moment du remplacement de la cartouche de filtration, lorsque cette dernière libère l'orifice de drainage.

Avantageusement, ledit orifice de drainage communique avec ladite lumière centrale dudit élément tubulaire.

On obtient de cette façon une structure simple et efficace de l'élément tubulaire.

D'autres caractéristiques et avantages de l'invention apparaîtront plus clairement à la lecture de la description suivante d'un mode de réalisation préférentiel de l'invention donné à titre d'exemple illustratif et non limitatif, et des dessins parmi lesquels :
- la figure 1 illustre en coupe une cartouche de filtration selon un premier mode de réalisation de l'invention selon lequel le flasque supérieur est plat ;
- la figure 2 illustre un ensemble de filtrage intégrant une cartouche de filtration selon le premier mode de réalisation de l'invention ;
- les figures 3 et 4 procurent des vues, respectivement selon les coupes C-C et E-E de l'élément tubulaire de l'ensemble de filtrage selon l'invention, de façon à illustrer le cheminement du fluide filtré ;
- la figure 5 procure une vue en coupe de l'élément tubulaire au niveau des orifices de drainage et d'évacuation ;
- la figure 6 procure une vue en coupe d'un évent de cartouche de filtration selon l'invention ;
- la figure 7 illustre un ensemble de filtrage intégrant une cartouche de filtration selon un deuxième mode de réalisation de l'invention, selon lequel le flasque supérieur de la cartouche présente une cheminée.

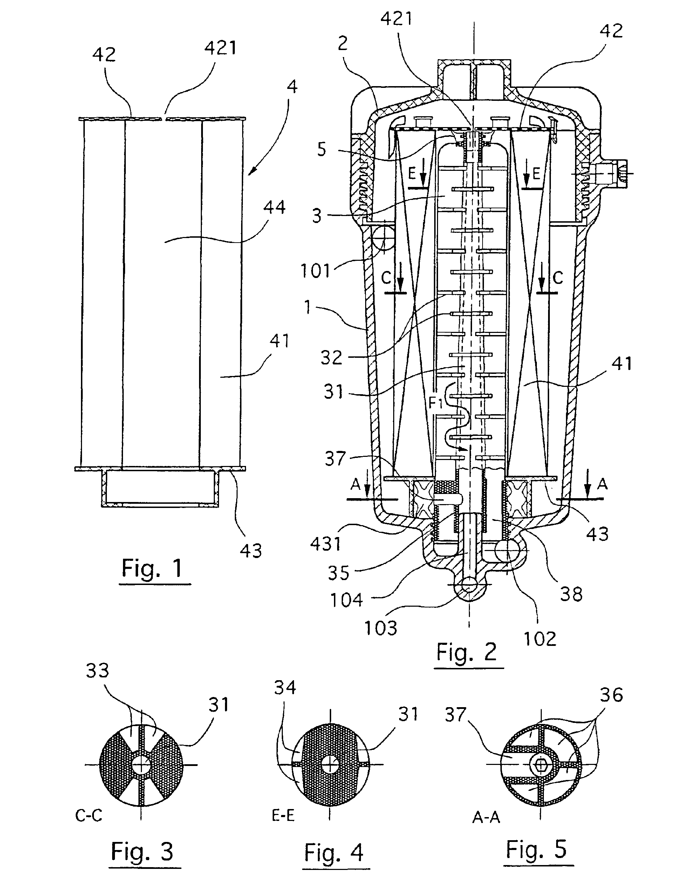

En référence à la figure 2, un ensemble de filtrage pour liquide circulant dans un moteur ou un équipement hydraulique comprend une cuve 1 et un couvercle 2 délimitant un volume à l'intérieur duquel est monté un élément tubulaire 3 qui supporte une cartouche de filtration 4 comprenant un médium de filtration 41 délimité par un flasque supérieur 42 et un flasque inférieur 43.

La cuve 1 comprend un orifice d'admission 101 de liquide, un orifice 102 d'un conduit de sortie de liquide filtré, un orifice 103 d'un conduit de retour au réservoir de liquide.

Telle que représentée sur la figure 2 et selon un premier mode de réalisation de l'invention, le flasque supérieur 42 est plat et intègre en son centre un évent 421 communiquant avec la lumière tubulaire 44 de la cartouche de filtration 4.

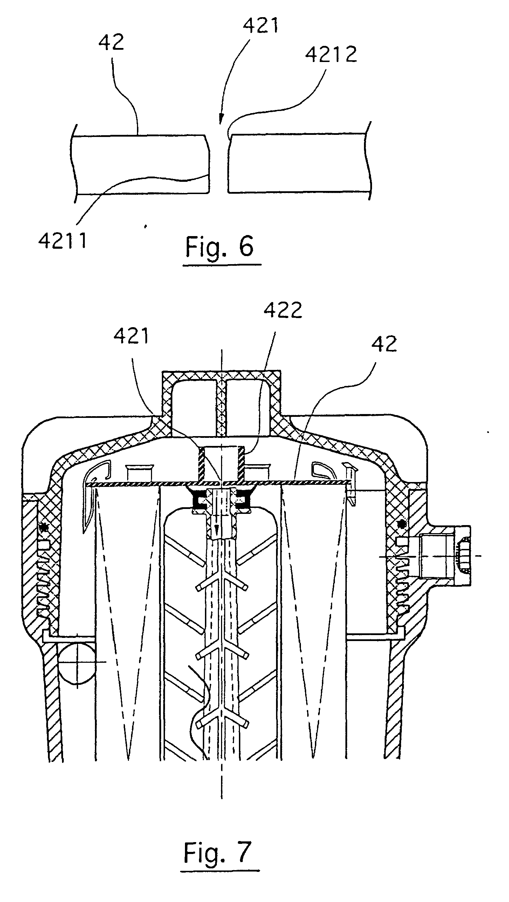

Selon le deuxième mode de réalisation illustré par la figure 7, le flasque supérieur 42 présente une cheminée 422, sensiblement coaxiale avec l'évent 421.

Comme cela apparaît clairement sur la figure 6, l'évent 421 comprend un portion cylindrique 4211 et une partie évasée 4212, la portion cylindrique présentant un diamètre d'environ 0,5 mm.

Selon l'un ou l'autre mode de réalisation d'un ensemble de filtrage selon l'invention, l'élément tubulaire 3 est monté et maintenu au fond de la cuve par une double liaison annulaire. La cartouche de filtration 4 est emmanchée sur l'élément tubulaire 3 de telle sorte que l'évent 421 communique avec la lumière centrale 31 (délimité par les lignes en traits pointillés) de l'élément tubulaire 3.

La cartouche 4 est supportée de façon étanche sur l'élément tubulaire 3 à l'aide d'un joint à lèvre 5 monté sur une extrémité de l'élément cylindrique 3 et d'un joint 431 pré-monté dans un logement prévu à cet effet dans le flasque inférieur 43.

On notera que l'élément tubulaire 3 porte des ailettes 32 disposées en quinconce de sorte que le liquide filtré s'écoule le long d'un chemin sinueux tel qu'illustré par la flèche F1, passant successivement par les espaces 33, 34 respectivement illustrés par les figures 3 et 4.

En référence à la figure 5, la base 35 de l'élément tubulaire 3 présente une section dans laquelle sont ménagés quatre orifices d'évacuation 36 susceptibles de communiquer, par l'intermédiaire du volume annulaire 38, avec l'orifice 102 de sortie de liquide filtré ménagé dans la cuve 1.

L'élément tubulaire présente en outre un orifice de drainage 37 communiquant, par l'intermédiaire du conduit 104, avec l'orifice 103 de retour au réservoir de liquide ou de gaz. Lors de l'extraction de la cartouche de filtration 4, cet orifice de drainage 37, alors libéré, permet l'écoulement du liquide contenu dans la cuve 1 jusqu'à vidange complète ou quasi complète de la cuve.

Dans les deux modes de réalisation, l'orifice 37 débouche dans la lumière centrale 31 de l'élément tubulaire 3.

Selon la cartouche de filtration 4 et l'ensemble de filtrage qui viennent d'être décrits, l'évent 421 du flasque 42 communiquent par l'intermédiaire de la lumière centrale 31 de l'élément tubulaire 3, avec le conduit 104 de retour de liquide, ainsi qu'éventuellement du gaz, au réservoir du moteur ou de l'équipement hydraulique.

Ainsi, lors du remplissage en liquide de l'ensemble de filtrage, l'air contenu dans la cuve passe par l'évent 421, puis par la lumière centrale 31 pour être dirigé, à l'aide du conduit 104 et de l'orifice 103, vers le réservoir de liquide.

## Revendications

1. Ensemble de filtrage pour liquide circulant dans un moteur ou un équipement hydraulique, du type comprenant :
- une cuve (1) ;
- un couvercle (2) ;
- un élément tubulaire (3) présentant une lumière centrale (31) et destiné à supporter la surface intérieure d'une cartouche de filtration ;
- une cartouche de filtration (4) séparable dudit élément tubulaire (3),
**caractérisé en ce que** ladite cartouche de filtration (4) comprend un médium de filtration (41) présentant une lumière tubulaire (44) sans tube central intérieur, ledit medium de filtration étant délimité par un flasque supérieur (42) et un flasque inférieur (43), ledit flasque supérieur (42) présentant un évent (421) communiquant avec ladite lumière tubulaire (44) dudit medium de filtration (41), et **en ce que** la lumière centrale (31) dudit élément tubulaire (3) communique de façon étanche avec ledit évent (421) de ladite cartouche (4) lorsque celle-ci est en position de filtrage dans l'ensemble de filtrage.

2. Ensemble de filtrage selon la revendication 1, **caractérisé en ce que** ledit évent (421) communique, par l'intermédiaire de ladite lumière centrale (31) dudit élément tubulaire (3), avec un conduit de retour (104) dudit liquide, ainsi qu'éventuellement du gaz, au réservoir dudit moteur ou dudit équipement hydraulique.

3. Ensemble de filtrage selon les revendications 1 ou 2, **caractérisé en ce qu'**il comprend un joint (5) emmanché sur ledit élément tubulaire (3).

4. Ensemble de filtrage selon la revendication 3, **caractérisé en ce que** ledit joint (5) est un joint à lèvre, ladite lèvre dudit joint venant en appui sous ledit flasque supérieur.

5. Ensemble de filtrage selon l'une quelconque des revendications 1 à 4, **caractérisé en ce que** ledit élément tubulaire (3) comprend au moins un orifice d'évacuation (36) qui communique avec un conduit de sortie (102) dudit fluide filtré ménagé dans ladite cuve.

6. Ensemble de filtrage selon l'une quelconque des revendications 1 à 5, **caractérisé en ce que** ledit élément tubulaire (3) comprend au moins un orifice de drainage (37) qui communique avec ledit conduit (104) ménagé dans ladite cuve pour le retour dudit liquide, ainsi qu'éventuellement du gaz, au réservoir dudit moteur ou dudit équipement hydraulique.

7. Ensemble de filtrage selon la revendications 6, **caractérisé en ce que** ledit orifice de drainage (37) communique avec ladite lumière centrale (31) dudit élément tubulaire (3).

## Claims

1. Filtering assembly for a liquid circulating in an engine or hydraulic equipment, of the type comprising:
- a housing (1);
- a cover (2);
- a tubular element (3) having a central aperture (31) and intended to support the internal surface of a filtering cartridge;
- a filtering cartridge (4) separable from said tubular element (3),
**characterised in that** said filtering cartridge (4) comprises a filtering medium (41) having a tubular aperture (44) without a central inner tube, said filtering medium being defined by an upper plate (42) and a lower plate (43), said upper plate (42) having a vent (421) communicating with said tubular aperture (44) of said filtering medium (41) and **in that** the central aperture (31) of said tubular element (3) sealably communicates with said vent (421) of said cartridge (4) when it is in the filtering position in the filtering assembly.

2. Filtering assembly according to claim 1, **characterised in that** said vent (421) communicates, by means of said central aperture (31) of said tubular element (3), with a return pipe (104) of said liquid, possibly also gas, to the reservoir of said engine or said hydraulic equipment.

3. Filtering assembly according to claims 1 or 2, **characterised in that** it comprises a seal (5) push-fitted onto said tubular element (3).

4. Filtering assembly according to claim 3, **characterised in that** said seal (5) is a lip seal, said lip of said seal being supported below said upper plate.

5. Filtering assembly according to any of claims 1 to 4, **characterised in that** said tubular element (3) comprises at least one discharge port (36) which communicates with an outlet pipe (102) of said filtered fluid incorporated in said housing.

6. Filtering assembly according to any of claims 1 to 5, **characterised in that** said tubular element (3) comprises at least one drainage port (37) which communicates with said pipe (104) incorporated in said housing for the return of said liquid, possibly also gas, to the reservoir of said engine or said hydraulic equipment.

7. Filtering assembly according to claim 6, **characterised in that** said drainage port (37) communicates with said central aperture (31) of said tubular element (3).

## Patentansprüche

1. Filtrieranordnung für eine Flüssigkeit, die in einem Motor oder einer Hydraulikvorrichtung zirkuliert, des Typs, der umfasst:
- einen Behälter (1);
- einen Deckel (2);
- ein röhrenförmiges Bauteil (3), das eine zentrale Öffnung (31) aufweist und dazu bestimmt ist, die Innenoberfläche einer Filterpatrone zu tragen;
- eine Filterpatrone (4), die von besagtem röhrenförmigem Bauteil (3) abtrennbar ist,
**dadurch gekennzeichnet, dass** besagte Filterpatrone (4) ein Filtermedium (41) umfasst, das eine röhrenförmige Öffnung (44) ohne inneres zentrales Rohr aufweist, wobei besagtes Filtermedium durch eine obere Platte (42) und eine untere Platte (43) abgegrenzt ist, wobei besagte obere Platte (42) eine Lüftungsöffnung (421) aufweist, die mit besagter röhrenförmiger Öffnung (44) besagten Filtermediums (41) in Verbindung steht, und **dadurch**, dass die zentrale Öffnung (31) besagten röhrenförmigen Bauteils (3) mit besagter Lüftungsöffnung (421) besagter Patrone (4) dicht in Verbindung steht, wenn diese in der Filtrieranordnung in Filtrierstellung ist.

2. Filtrieranordnung gemäß Anspruch 1, **dadurch gekennzeichnet, dass** besagte Lüftungsöffnung (421) über besagte zentrale Öffnung (31) besagten röhrenförmigen Bauteils (3) mit einer Leitung zum Rückfluss (104) besagter Flüssigkeit sowie gegebenenfalls des Gases in den Vorratsbehälter besagten Motors oder besagter Hydraulikvorrichtung in Verbindung steht.

3. Filtrieranordnung gemäß den Ansprüchen 1 oder 2, **dadurch gekennzeichnet, dass** sie eine Dichtung (5) umfasst, die auf besagtes röhrenförmiges Bauteil (3) aufgezogen ist.

4. Filtrieranordnung gemäß Anspruch 3, **dadurch gekennzeichnet, dass** besagte Dichtung (5) eine Lippendichtung ist, wobei besagte Lippe besagter Dichtung unterhalb besagter oberer Platte zum Andruck kommt.

5. Filtrieranordnung gemäß einem der Ansprüche 1 bis 4, **dadurch gekennzeichnet, dass** besagtes röhrenförmiges Bauteil (3) wenigstens eine Auslassöffnung (36) umfasst, die mit einer Leitung zum Abfluss (102) besagter filtrierter Flüssigkeit in Verbindung steht, die in besagtem Behälter angeordnet ist.

6. Filtrieranordnung gemäß einem der Ansprüche 1 bis 5, **dadurch gekennzeichnet, dass** besagtes röhrenförmiges Bauteil (3) wenigstens eine Ableitungsöffnung (37) umfasst, die mit besagter Leitung (104) in Verbindung steht, die für den Rückfluss besagter Flüssigkeit sowie gegebenenfalls des Gases in den Vorratsbehälter besagten Motors oder besagter Hydraulikvorrichtung in besagtem Behälter angeordnet ist.

7. Filtrieranordnung gemäß Anspruch 6, **dadurch gekennzeichnet, dass** besagte Ableitungsöffnung (37) mit besagter zentraler Öffnung (31) besagten röhrenförmigen Bauteils (3) in Verbindung steht.
